# EUROPÄISCHE PATENTSCHRIFT

(11) **EP 3 268 238 B1**
(45) Veröffentlichungstag und Bekanntmachung des Hinweises auf die Patenterteilung: **23.06.2021**
(21) Anmeldenummer: 15794101.4
(22) Anmeldetag: 28.10.2015
(51) Int. Cl.: B44C 3/00, B44C 1/22, C25D 5/14, C25D 5/48, C23C 18/16, C23C 18/22, C23C 18/32, C23C 18/38

(54) **VERFAHREN ZUR HERSTELLUNG EINES KUNSTSTOFFBAUTEILS MIT STRUKTURIERTER OBERFLÄCHE**
METHOD FOR PRODUCING A PLASTIC COMPONENT HAVING A STRUCTURED SURFACE
PROCÉDÉ DE PRODUCTION D'UN ÉLÉMENT EN PLASTIQUE À LA SURFACE STRUCTURÉE

(30) Priorität: 11.03.2015 DE 202015001879 U
(43) Veröffentlichungstag der Anmeldung: 17.01.2018
(73) Patentinhaber: Gerhardi Kunststofftechnik GmbH, 58511 Lüdenscheid (DE)
(72) Erfinder: KIESLICH, Dirk, 58840 Plettenberg (DE)
(74) Vertreter: Patentanwälte Dörner & Kötter PartG mbB
(86) Internationale Anmeldenummer: PCT/EP2015/075010
(87) Internationale Veröffentlichungsnummer: WO 2016/142005

(56) Entgegenhaltungen:
- EP-A1- 2 730 429
- EP-A2- 2 551 383
- WO-A1-2011/023798
- FR-A1- 2 806 936
- US-A1- 2008 136 065
- US-A1- 2014 354 755

## Beschreibung

Die Erfindung betrifft ein Verfahren zur Herstellung eines galvanisch dekorierten Bauteils aus Kunststoff mit einem Schichtaufbau und einer ansichtsseitig in die Oberfläche der Chromschicht eingebrachten Struktur oder Bürstung. Bei den Bauteilen aus galvanisierten Kunststoff der hier betrachteten Art handelt es sich im Wesentlichen um Dekor- und Bedienelemente für die Automobilindustrie.

In Kraftfahrzeugen werden zum Beispiel aus optischen und ästhetischen Gründen gerne gebürstete Oberflächen auf Dekor- und Bedienelementen eingesetzt. Solche Bürststrukturen werden zurzeit fast ausschließlich auf Echtmetallen wie Aluminium oder Edelstahl appliziert. Zum Einsatz kommen diese bearbeiteten Metalle dann als dünne Bleche, die vor oder nach der Bürstung meist in einem nachgeschalteten Prägeprozess in die gewünschte Kontur verformt und anschließend mit dem Trägerbauteil, also dem Bedienelement oder dem Dekorelement, durch Verkleben, Hinterspritzen, Verklemmen oder anderweitige Fügeverfahren verbunden werden.

Diese Bauteile sind durch den nur schwer automatisierbaren Bürstprozess und dem anschließenden Verformen der Metallbleche sehr kostenintensiv und unterliegen außerdem verformungstechnischen Grenzen. Auch sind partielle Bürstungen auf einem Oberflächenniveau nur sehr aufwendig durch maskieren möglich.

Zur Nachahmung von metallischen, gebürsteten beziehungsweise strukturierten Bauteilen aus Kunststoff sind verschiedene Ansätze bekannt:
So basiert eine Nachahmung darauf, dass eine Bürststruktur in die oberflächenabformende Seite des Spritzgusswerkzeugs eingebracht ist und dort während des Spritzgießvorgang auf das Kunststoffbauteil übertragen wird. In einem anschließenden Oberflächenbeschichtungsverfahren, beispielsweise dem Dünnschicht-Metallübertrag durch das PVD-Verfahren (Physical-Vapor-Deposition) kann eine Metallisierung der Oberfläche erfolgen.

Bei dem PVD-Verfahren werden dünne Schichten in einem Vakuum abgeschieden. Das abzuscheidende Material liegt in fester Form vor. Das verdampfte Material bewegt sich durch die Vakuumkammer und trifft auf die zu beschichtenden Bauteile, wo es zur Schichtbildung kommt. Durch die nur wenige Mikro- bis Nanometer aufbauende PVD-Schicht, werden die abgeformten, im Werkzeug eingebrachten Strukturen, Bürststrukturen oder Narben sehr detailgetreu abgebildet. Als problematisch hat sich jedoch erwiesen, dass die so abgeschiedene und sehr dünne Metallschicht ohne Aufbringen einer zusätzlichen Schutzschicht keine hinreichende Festigkeit gegen Abrieb aufweist. Aus diesem Grund wird bei diesem Verfahren nach dem Aufbringen der PVD-Schicht zusätzlich eine Schutzschicht, beispielsweise aus Lack, aufgebracht. Durch diesen zusätzlichen Arbeitsgang sind jedoch die Kosten erhöht. Außerdem wird die warme haptische Empfindung der im PVD-Verfahren hergestellten Bauteile im Gegensatz zur kalten Haptik der Echtmetallteile bzw. der galvanisierten Oberfläche, als qualitativ nicht ansprechend empfunden.

Darüber hinaus sind Verfahren bekannt, bei denen Kunststofffolien mit einer entsprechenden Bürststruktur geprägt werden. Auf diesen wird meist rückseitig eine metall-farbene Druckschicht aufgebracht. Diese Folien werden je nach Kontur gestanzt bis verformt und in ein formgebendes Spritzgusswerkzeug eingelegt. Im anschließenden Spritzgießvorgang verbindet sich die Folie dauerhaft mit dem Kunststoffsubstrat und zeigt auf der Oberfläche die gewünschte Bürststruktur. Auch hierdurch kann optisch eine Bürststruktur imitiert werden; metallisch-haptischen und qualitativen Ansprüchen können solche im IML-Verfahren (In-Mould-Labeling) oder FIM-Verfahren (Film-Insert-Moulding) dekorierte Bauteile jedoch nicht gerecht werden.

Eine weitere Möglichkeit der Erzeugung solcher Oberflächen bietet das IMD-Verfahren (In-Mould Decoration) Hierbei wird ein Folienträger durch Prägung oder Walzung mit einer Bürststruktur versehen und mit einem metallisch wirkenden Thermotransfer-Lacksystem bedruckt. Im Spritzgießprozess drückt sich dann die eingeprägte Bürststruktur auf das Spritzgussbauteil ab und das metallisch wirkende Lacksystem wird übertragen. Auch hier entsteht ein metallisch wirkendes gebürstetes Bauteil ohne metallische Haptik. Aus FR 2806936 A1 ist ein Verfahren gemäß dem Oberbegriff von Anspruch 1 bekannt.

Versuche, eine Bürststruktur auf galvanisierte Bauteile zu übertragen, scheiterten bisher an diversen technischen Aspekten: So wird zwar eine in die oberflächenabformende Seite des Spritzgusswerkzeugs eingebrachte Bürstung oder Struktur vom Kunststoffmaterial detailgetreu abgeformt; durch die bei der anschließenden Galvanisierung abgeschiedenen Metallschichten wird die Bürstung bzw. Struktur jedoch soweit eingeebnet, das die optische Anmutung vollständig verloren geht.

Der Standardaufbau einer auf Kunststoff galvanisch abgeschiedenen Chromdekoration beginnt nach der chemischen Aufrauhung und der autokatalytischen Abscheidung von sehr dünnen Hilfsleitschichten. Diese bestehen in der Regel aus wenigen zehntel Mikrometern (µm) Nickel oder Kupfer. Im Anschluss an die autokatalytische Abscheidung durchfährt das Bauteil die elektrolytische Abscheidung. In einem ersten Funktionsbad wird die sehr dünne Hilfsleitschicht durch ein elektrolytisch abgeschiedenes Nickel oder durch eine sogenannte autokatalytische Kupferschicht verstärkt. Im Anschluss daran wird eine relativ zur gesamten Schichtstärke dicke Kupferschicht abgeschieden. Diese beträgt in der Regel 15 bis 25 µm und dient als duktile Schicht einebnend und gleicht die unterschiedlichen Temperaturausdehnungen des Kunststoffuntergrunds und des späteren Metallaufbaus aus. Nach der abgeschiedenen Kupferschicht werden weitere Nickelschichten abgeschieden. Diese bestehen in der Regel aus einer Halbglanznickelschicht mit einer Dicke von ca. 8 bis 10 µm, einer Glanznickelschicht mit einer Dicke von ca. 8 bis 10 µm sowie einer korrosionssteuernden, rissigen oder porigen Nickelschicht von 1,5 bis 2,5 µm. Im Anschluss und als Abschluss wird je nach Einsatz als Exterieur- oder Interieurbauteil und je nach Vorgaben des Kunden eine Chromschicht mit einer Dicke von ca. 0,3 bis 0,5 µm bei einer mikroporiger Nickelschicht sowie ca. 0,6 bis 0,8 µm bei einer mikrorissigen Nickelschicht abgeschieden.

Nur dieser Multilayer-Metallaufbau stellt einen gesteuerten Korrosionsverlauf durch Korrosionsstromverteilung an Rissen und Poren dar. Wird nun auf mechanische Weise eine Bürststruktur eingebracht, zerstört diese durch die Tiefe der mechanischen Bürstung den Korrosionsmechanismus des Chrombauteils. Des Weiteren liegen durch die mechanische Beschädigung der Bürststrukturen Nickelschichten frei, was ggf. Allergien auslösen kann.

### Hier will die Erfindung Abhilfe schaffen.

Der Erfindung liegt die Aufgabe zugrunde, ein galvanisch dekoriertes Kunststoffbauteil mit einer in die Oberfläche eingebrachten Struktur oder Bürstung bereitzustellen, das die vorstehenden Nachteile vermeidet und insbesondere bei dem der Korrosionsmechanismus des Chrombauteils nicht zerstört ist und keine Nickelschichten freigelegt sind.

Gemäß der Erfindung wird diese Aufgabe dadurch gelöst, dass die Struktur oder Bürstung in der ansichtsseitigen Oberfläche nach der galvanischen Abscheidung eine Bürstung oder Struktur nachbildet.

Die Aufgabe wird durch ein Verfahren gemäß dem Anspruch 1 gelöst.

Mit der Erfindung ist die Möglichkeit geschaffen, ein galvanisiertes Kunststoffbauteil mit strukturierter Oberfläche zu schaffen, bei dem die Oberfläche eine nahezu identische Abbildung der zum Beispiel gebürsteten Oberfläche eines metallischen Bauteils darstellt.

Gemäß der Erfindung wird die Struktur in die Oberfläche des Bauteils mittels eines verbrennenden und verdrängenden Lasers eingebracht. Die Bearbeitung der Oberfläche mittels verbrennendem Laser bietet die Möglichkeit, sehr genau die Oberfläche eines Referenzbauteils nachzubilden. Zudem kann durch den Laser sehr genau die Brenntiefe beeinflusst werden, so dass ein Eindringen in die Nickelschichten verhindert werden kann und auch der Korrosionsmechanismus des Chrombauteils nicht zerstört wird.

Erfindungsgemäß wird der Datensatz bearbeitet. Hierdurch besteht die Möglichkeit, der strukturierten Oberfläche besondere Merkmale hinzuzufügen. So lässt sich durch die Bearbeitung des Datensatzes die Struktur der Oberfläche beeinflussen, beispielsweise durch Vorgabe einer bereichsweise verminderten Brenntiefe für den Laser. So kann innerhalb der strukturierten Oberfläche eine Symbolik geschaffen werden, beispielsweise in Form von Buchstaben oder Zahlen, die den Fahrzeugtyp oder die Ausstattungsvariante darstellen können. Diese Bereiche können ebenfalls eine strukturierte Oberfläche aufweisen, so dass die gesamte Ansichtsseite des Bauteils beispielsweise den Eindruck gebürsteten Metalls erweckt, gleichzeitig die Buchstaben oder Zahlen erkennbar sind.

Darüber hinaus ist es durch die Bearbeitung des Datensatzes möglich, auch Bereiche vollständig unbearbeitet zu lassen, wobei diese Bereiche wiederum als Symbole und Intarsien glänzend von einer strukturierten oder gebürsteten Umgebung umgeben sein können.

Dabei werden bei der Bearbeitung des Datensatzes die Extremwerte der abgenommenen Oberfläche eines Referenzbauteils ausgeblendet. Dadurch können in der Referenzoberfläche enthaltene besondere Tiefen oder Höhen, die bei der mechanischen Bearbeitung des Referenzbauteils entstehen können, herausgefiltert werden, um zum Beispiel Tiefen zu vermeiden, die bei der anschließenden Bearbeitung mit Hilfe des verbrennenden und verdrängenden Lasers ein Eindringen des Lasers in die Nickelschichten zur Folge hätten.

Andere Weiterbildungen und Ausgestaltungen der Erfindung sind in dem Unteranspruch angegeben. Ein Ausführungsbeispiel der Erfindung ist in den Zeichnungen dargestellt und wird nachfolgend im Einzelnen beschrieben. Es zeigen:
F igur 1 die schematische Darstellung eines galvanisierten Bauteils aus Kunststoff in Form eines Tasters.

Das beschichtete Bauteil 1 zeigt ein aus Kunststoff gefertigtes Produkt für die Automobilindustrie - einen Taster - mit anschließender Galvanisierung. Bei dem Kunststoff handelt es sich um einen galvanisierbaren Kunststoff 5, beispielsweise ABS-Kunststoffe (Acrylnitril-Butadien-Styrol-Copolymerisate) sowie Mischungen mit Polycarbonat(en). Das Bauteil 1 weist nach Abschluss der galvanischen Beschichtung einen nach den Anforderungen des jeweiligen Einsatzgebietes geforderten Schichtaufbau 2 auf. Die Schichtstärke der abschließenden Chromschicht 3 beträgt ca. 1,0 µm bis 1,2 µm. Sie ist folglich um 0,1 µm bis 0,8 µm höher, bevorzugt um 0,2 µm bis 0,5 µm höher als der Topographiebereich einer Struktur oder Bürstung, welche von einem Referenzbauteil, das mit einer herkömmlichen Bürstung oder Struktur versehen ist, abgeführt wurde. Bei dem Referenzbauteil handelt es sich in der Regel um ein Metallbauteil mit einer gebürsteten Oberfläche. Das anschließend durch Laserabtrag und Verdrängung 4a oder mechanisches Bürsten 4b bearbeitete Bauteil weist abschließend eine Struktur auf der ansichtseitigen Oberfläche auf, die der einer gebürsteten Metalloberfläche entspricht.

Bei dem Verfahren zur Herstellung eines Kunststoffbauteils mit strukturierter Oberfläche wird zunächst eine Referenzoberfläche abgenommen. Erfindungsgemäß handelt es sich bei der Referenzoberfläche um eine gebürstete oder strukturierte Oberfläche eines Metallbauteils. Die Abnahme der Oberfläche erfolgt durch optische Abtastung, beispielsweise mit Hilfe eines Lasers. Hierbei wird ein Lichtpunkt erzeugt, der über die Referenzoberfläche verfahren wird. Das Licht wird von der Oberfläche reflektiert und die Reflektion wird aufgenommen. Aufgrund der unterschiedlichen Höhen und Tiefen der strukturierten Oberfläche ergeben sich bei der Reflektion unterschiedliche Wellenlängen, die gemessen, digitalisiert und gespeichert werden.

Alternativ, jedoch nicht im Rahmen der Erfindung, kann die die Abnahme der Referenzoberfläche durch Abtastung mittels eines mechanischen Tasters erfolgen. Hierzu wird ein sehr dünner und feinfühliger Taster über die Oberfläche verfahren, der die Höhen und Tiefen der strukturierten Oberfläche misst. Die Messergebnisse werden digitalisiert und gespeichert.

Die auf diese Weise ermittelte Topographie der Referenzoberfläche wird als bearbeitbarer 3D-Datensatz konvertiert. Als bearbeitbarer Datensatz kann zum Beispiel ein STL-Datensatz (Stereolithographie) angefertigt werden. Bei diesem Datensatz werden die abgenommenen Oberflächen aus zusammengesetzten Dreiecken beschrieben. Andere 3D-Datensatzformate sind hier ebenfalls verwendbar.

Es besteht darüber hinaus auch die Möglichkeit, jedoch nicht im Rahmen der Erfindung, den Datensatz programmiertechnisch zu erzeugen. Hierbei wird eine frei wählbare Oberflächenstruktur programmiert und ebenfalls als 3D-Datensatzformat hinterlegt. Die Oberflächenstruktur kann dabei mit einer gebürsteten oder strukturierten Oberfläche eines Metallbauteils übereinstimmen. Es besteht aber auch die Möglichkeit, andere Oberflächenstrukturen zu programmieren.

Der erstellte Datensatz wird daraufhin derart bearbeitet, dass oberste Spitzen und unterste Tiefen herausgefiltert werden. Dadurch wird erreicht, dass Extremwerte innerhalb der Topographie der Referenzoberfläche, die beispielsweise durch das Ausreißen von Borsten oder Schleifkörpern der zum Bürsten der Referenzoberfläche eingesetzten Bürste oder Schleifgerät hervorgerufen wurden, ausgeblendet werden. Es ergibt sich dadurch ein Datensatz für die Topographie, deren Spitzen und Tiefen sich dann in einem Bereich zwischen 0,2 bis 1,4 µm, bevorzugt in einem Bereich zwischen 0,5 µm bis 0,9 µm, bewegen.

Das Bauteil 1, das nach Abschluss des Verfahrens auf seiner Ansichtsseite eine einer gebürsteten Oberfläche ähnlich sehende Oberfläche aufweisen soll, wird in bekannter Weise aus Kunststoff gespritzt. Im Anschluss wird das zu bearbeitende Bauteil 1 galvanisiert, wobei ein den Anforderungen des jeweiligen Einsatzgebietes geforderter Schichtaufbau erzeugt wird. Nach der Galvanisierung weist das Bauteil 1 eine Chromschichtstärke auf, die größer als der gesamte Topographiebereich der abgenommenen und bearbeiteten Struktur oder Bürstung der Referenzoberfläche nach der Bearbeitung des Datensatzes ist, also nach Ausblenden der Extremwerte. Bevorzugt liegt die Schichtstärke der abschließenden Chromschicht um 0,1 µm bis 0,8 µm höher, bevorzugt um 0,2 µm bis 0,5 µm, als die Höhe des Topographiebereichs der Referenzoberfläche nach der Bearbeitung des Datensatzes.

Danach wird die Chromoberfläche des Bauteils 1 durch einen verbrennenden und verdrängenden Laserstrahl gemäß des bearbeiteten Datensatzes der Bürstung oder Struktur bearbeitet. Durch den Laser wird dabei die Chromoberfläche teilweise verbrannt und verdrängt. Die Verbrennung erfolgt im Zentrum des Laserstrahls. Um das Zentrum des Laserstrahls herum, also im Randbereich des Abtrags, erfolgt keine Verbrennung, sondern eine Verdrängung der Chromschicht, die Aufwürfe erzeugt. Die Verbrennung geschieht in Abhängigkeit der in dem bearbeiteten Datensatz gespeicherten Topographie der Referenzoberfläche ohne die ausgeblendeten Extremwerte, wobei die Tiefen durch eine größere Verbrennung und längere Bearbeitungszeit, Höhen durch eine geringere und kürzere Verbrennung der Chromoberfläche geschaffen werden. Bei der Bearbeitung der Chromoberfläche ist entscheidend darauf zu achten, dass die Verbrennung und die Verdrängung nicht bis in eine Tiefe reichen, die tiefer als die Stärke der Chromschicht ist. Dies ist zu vermeiden, da der Laser andernfalls den Korrosionsmechanismus des Chrombauteils zerstören und Nickelschichten freilegen könnte.

Grundsätzlich, jedoch nicht im Rahmen der Erfindung, kann die Bürstung oder Struktur auch mechanisch in das verchromte Bauteil 1 eingebracht werden. Hierzu ist es sachdienlich, die mechanische Bearbeitung des Bauteils 1 zu einem sehr späten Beschichtungszeitpunkt in der galvanischen Abscheidung vorzusehen. Vorteilhaft wird die Bürstung oder Struktur nach der Halbglanznickelschicht, der Glanznickelschicht sowie der korrosionssteuernden rissigen oder porigen Nickelschicht eingebracht. Die Einbringung nach der Glanznickelschicht hat sich dabei als der bevorzugte Zeitpunkt erwiesen. Die Bauteile müssen dafür jedoch dem Galvanikprozess entnommen, mechanisch bearbeitet werden und dem Galvanikprozess zur abschließenden Weiterbeschichtung bis Chrom wieder zugeführt werden. Eine mechanische Bearbeitung der Chromschicht ist ebenfalls möglich, der allgemeine Gesamteindruck ist dann jedoch in der Regel weniger hochwertig. Ein Problem der mechanischen Herstellung der gewünschten Struktur auf dem Bauteil 1 ist aber die Tatsache, dass die Raum, in dem die mechanische Bearbeitung vorgenommen wird, staubdicht von den Räumen der Galvanik getrennt sein muss, um eine Kontamination der Galvanik mit aus der mechanischen Bearbeitung des Bauteils resultierendem Staub zu vermeiden. Dies ist jedoch üblicherweise mit hohen Kosten verbunden.

Ein wesentlicher Vorteil der erfindungsgemäßen Gestaltung des galvanisch dekorierten Kunststoffbauteils mit der in die Oberfläche eingebrachten Struktur oder Bürstung durch Laserbearbeitung ist die Darstellung der Bürstbereiche durch eine computerunterstütze Konstruktion. Mit dem erfindungsgemäßen Verfahren kann erstmals ein genaues Abbild einer Bürststruktur über eine Vielzahl verschiedener Bauteile erzielt werden. Weiter können die Struktur- oder Bürstbereiche genau definiert werden. Technisch möglich sind somit Bürst- und Glanzbereiche unmittelbar nebeneinander auf der Oberfläche des Bauteils, was mit der herkömmlichen Technologie des mechanischen Bürstens nicht möglich ist.

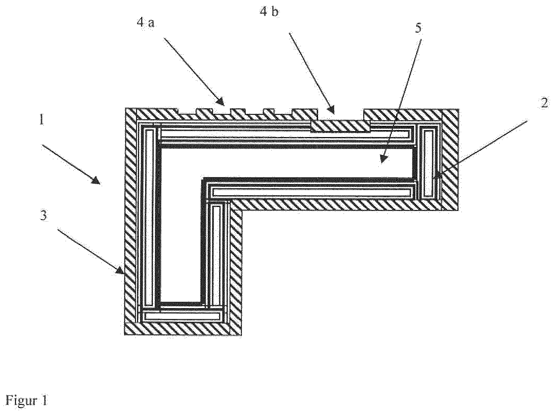

## Patentansprüche

1. Verfahren zur Herstellung eines Kunststoffbauteils (1) mit strukturierter Oberfläche, bei dem das Bauteil (1) aus Kunststoff durch Spritzgießen hergestellt wird, anschließend eine Chromschicht galvanisiert wird und eine Struktur auf die ansichtseitige, die Chromschicht aufweisende Oberfläche des Bauteils (1) eingebracht wird, wobei die Struktur in das Bauteil (1) nach Vorgaben eines Datensatzes mittels eines verbrennenden und verdrängenden Lasers eingebracht wird, **dadurch gekennzeichnet, dass** der Datensatz durch Abnahme einer Struktur oder Bürstung der Oberfläche eines Referenzbauteils aus Metall mittels optischer Abtastung gewonnen wird, und dass der Datensatz bearbeitet wird, wobei bei der Bearbeitung des Datensatzes die Extremwerte der abgenommenen Oberfläche des Referenzbauteils ausgeblendet werden, wobei mittels der Struktur in die Oberfläche des Bauteils (1) ein genaues Abbild der Referenzoberfläche des Referenzbauteils aus Metall erzielt wird.

2. Verfahren nach Anspruch 1, **dadurch gekennzeichnet, dass** nach der galvanischen Abscheidung das Bauteil derart bearbeitet wird, das eine mechanisch eingebrachte Bürstung oder Struktur nachgebildet wird.

## Claims

1. Method for producing a plastic component (1) having a structured surface, in which the component (1) is produced from plastic by injection moulding, a chromium coating is subsequently electroplated and a structure is introduced onto the visible surface of the component (1) having the chromium coating, wherein the structure is introduced into the component (1) according to specifications of a data set by means of a combusting and displacing laser, **characterised in that** the data set is obtained by recording a structure or brushing of the surface of a reference component made of metal by means of optical scanning and that the data set is processed, wherein during processing of the data set the extreme values of the scanned surface of the reference component are masked out, wherein by means of the structure an exact replica of the reference surface of the reference component made of metal in the surface of the component (1) is achieved.

2. Method according to claim 1, **characterised in that** after the electrodeposition, the component is processed in such a manner that a mechanically introduced brushing or structure is replicated.

## Revendications

1. Procédé de production d'un élément en plastique (1) à la surface structurée, au cours duquel l'élément (1) en plastique est fabriqué par moulage injecté, une couche de chrome étant galvanisée dessus et une structure étant ensuite conférée à la surface de l'élément (1) revêtue de la couche de chrome sur le côté visible, sachant que cette structure est réalisée dans l'élément (1), conformément aux critères d'un jeu de données, au moyen d'un laser opérant par brûlure et refoulement, **caractérisé en ce que** le jeu de données est obtenu par analyse d'une structure ou brossage de la surface d'un élément de référence en métal au moyen d'un palpage optique, et **en ce que** le jeu de données est traité, sachant que lors du traitement du jeu de données les valeurs extrêmes de la surface analysée par palpage de l'élément de référence sont masquées, sachant qu'au moyen de la structure réalisée dans la surface de l'élément (1), une copie exacte de la surface de référence de l'élément de référence en métal est réalisée.

2. Procédé selon la revendication 1, **caractérisé en ce qu'**après la séparation galvanique l'élément est usiné de sorte qu'un brossage ou une structure réalisé(e) mécaniquement est reproduit(e).
